# EUROPEAN PATENT APPLICATION

(11) **EP 4 468 486 A1**
(43) Date of publication of application: **27.11.2024**
(21) Application number: 23174436.8
(22) Date of filing: 22.05.2023
(51) Int. Cl.: H01M 50/293, H01M 10/658, H01M 50/24

(54) **PROTECTION ELEMENT AND BATTERY**

(71) Applicant: Saint-Gobain Adfors, 92400 Courbevoie (FR)
(72) Inventor: STUDE, Ulrich, 92400 Courbevoie (FR); BEESEN, Norbert, 92400 Courbevoie (FR)
(74) Representative: Von Rohr Patentanwälte Partnerschaft mbB

(57) **Abstract**

The present invention relates to a protection element for thermal insulation and/or protection of a rechargeable battery, preferably a lithium-ion battery or sodium-ion battery and/or a traction battery of an electric vehicle, wherein the protection element has an, in particular woven, fiber layer, preferably the fibers and/or fiber layer having a flame-retardant finish, the finish in particular comprising metal oxide. According to the invention, the fiber layer is preferably coated with a heat-reflecting, flame-retardant and/or dustproof coating. According to a further aspect, the present invention also relates to a rechargeable battery having several battery cells arranged next to each other, the battery cells having vents which are configured in such a way that hot gases and/or particles escape through the vent of a battery cell when a thermal runaway occurs in said battery cell, the battery comprising a protection element, which in particular covers one or more of the vents.

## Description

The present invention relates to a protection element according to the preamble of claim 1, a rechargeable battery according to the preamble of claim 11 and to a use of a protection element.

Due to their chemical composition, lithium-ion batteries in particular exhibit comparatively high instability. If a local short-circuit of the internal electrodes in a battery cell occurs, for example due to contamination of the separator separating the electrodes by trapped foreign particles and/or mechanical action or damage, the strong short-circuit current heats the battery cell up to 800 °C in a short time, sometimes up to 1300 °C. This process is known as thermal runaway. The thermal runaway of one battery cell can easily and/or quickly spread to other, adjacent battery cells, especially since the separator loses stability at relatively low temperatures, for example above 120 °C, and short circuits can therefore quickly occur in adjacent battery cells. This leads to an unstoppable chain reaction, wherein the energy stored in the battery is released in a short time, usually explosively and/or with the release of toxic gases and with the formation of flames and/or sparks. There is also the risk of the battery bursting when the internal pressure rises accordingly. The spread of a thermal runaway from one battery cell to adjacent battery cells is also known as thermal runaway propagation.

The battery cells of a lithium-ion battery usually comprise vents. A vent is a device through which hot gases and/or particles can escape when a thermal runaway of the battery cell occurs. The vent is typically designed in such a way that it (automatically) opens when a thermal runaway occurs. The vents allow a defined dissipation of the hot gases and/or particles in the case of a thermal runaway. The opening of the vent and/or the escape of hot gases and/or particles through the vent, in particular in the case of thermal runaway, is also denoted as venting.

WO 2019/121641 A1 discloses a multi-layer insulation element for a battery for thermal insulation. The insulation element comprises two cover layers which are configured as heat-resistant mica layers and a heat-resistant needled non-woven fiber layer which is arranged between the cover layers.

It is an object of the present invention to prevent a thermal runaway propagation in a battery.

The above object is solved by a protection element according to claim 1, a rechargeable battery according to claim 11 or a use according to claim 15. Advantageous developments are subject of the dependent claims.

In the present invention, the term "protection element" is preferably to be understood as a flat and/or sheet-like component, in particular a textile, which is designed and/or used for the thermal insulation and/or any other shielding of a battery and/or its cells and/or modules. In particular, the protection element is configured to prevent a thermal runaway propagation, i.e. the triggering of thermal runaways in adjacent cells (or modules) due to the occurrence of a first (often so-called "trigger") thermal runaway in a first cell.

In the present invention, the term "battery" is to be understood as meaning, in particular, a device for providing electrical energy by converting chemical energy. The battery is preferably composed of several interconnected accumulator cells and/or cell blocks, i.e. battery cells and/or battery modules. The battery is preferably a rechargeable battery or accumulator or secondary cell.

In particular, the battery is configured as a traction battery and/or for the drive of electric vehicles and/or as a sodium-ion battery or lithium-ion battery. Here, reliable and/or effective thermal insulation is important in order to protect the vehicle occupants in the event of the battery overheating, for example as a result of a traffic accident, at least until the arrival of rescue services.

According to a first aspect, the present invention relates to a protection element for thermal insulation and/or protection of a rechargeable battery, preferably a lithium-ion battery or sodium-ion battery and/or a traction battery of an electric vehicle. The proposed protection element has a fiber layer. Preferably, the fiber layer is woven or is a woven fabric. The fibers or yarns formed from filaments and/or the fiber layer preferably has/have a flame-retardant finish. In particular, the finish comprises metal oxide, for example copper oxide or aluminum oxide.

The metal oxide serves as or is a flame retardant and the finish renders the fiber layer flame-retardant or improves the flame retardancy of the fiber layer.

The fiber layer is preferably coated with a coating, preferably a heat-reflecting, flame-retardant and/or dustproof coating.

By the coating, the antislip properties and/or the fray proofness of the fiber layer or protection element are improved. Further, the coating is conducive to a clean protection element, in particular when cutting the protection element. In particular, residues, such as dust, dirt, fiber fragments and/or other particles, on the surface of the protection element can be reduced or avoided by the coating and/or the ingress of such residues into a battery or battery cells protected by the protection element is avoided or reduced.

Moreover, the coating is conducive to a defined and/or localized or spatially delimited destruction or formation of a hole in the protection element in the case of thermal runaway and/or venting of a battery cell. This is in particular achieved or supported by the heat-reflecting properties of the coating. This preferably leads to an at least short-time heat accumulation (as heat cannot dissipate so easily out of the cell) in the case of venting or a thermal runaway, which in turn results in a (localized) destruction and/or formation of a hole in the protection element, which lets hot gases and/or particles escape from the battery cell through the vent. Finally, the coating is conducive to a protection of battery cells other than the battery cell under thermal runaway, which is in particular achieved by the flame-retardant properties. The flame-retardancy preferably limits the area of the protection element that is destructed when a thermal runaway occurs and prevents the triggering of the thermal runaways in other battery cells.

The finish preferably comprises calcium silicate, silicic acid, a binder and/or a foaming agent. The calcium silicate and/or silicic acid preferably results in an improved adhesion of the flame retardant, in particular metal oxide, to the fibers and/or fiber layer. Further, the finish, in particular due to the calcium silicate and/or silicic acid, preferably improves the antislip properties and/or fray proofness of the fiber layer or protection element and/or reduces dust accumulation thereon. The binder serves to bind the different components of the finish and the foaming agent is conducive to a smooth application of the finish.

Preferably, the finish surrounds or encloses the fibers and/or fiber layer or in particular or more precisely yarns formed from the filaments on all sides and/or is applied to the fibers, yarns and/or fiber layer by dip coating. In other words, the finish is preferably a surface modification of the fibers, yarns and/or fiber layer. The dip coating in particular allows an even and/or complete finishing of the fiber layer.

The coating is preferably a polyurethane coating. This is conducive to the dust proofness and/or flame-retardancy of the coating and/or to an improved cleanliness, antislip properties and/or fray proofness of the protection element.

The coating preferably comprises metal particles, in particular aluminum particles. The heat-reflecting properties of the coating are preferably achieved by the metal or aluminum particles and respective advantages can be achieved.

Preferably, the coating forms a coating layer on the fiber layer and/or is arranged on one side of the fiber layer and/or is applied to the fiber layer by knife coating. The formation of a coating layer is in particular conducive to the dust proofness and/or heat-reflecting properties. The use of knife coating for applying the coating enables the formation of a coating layer and/or application of the coating on one side the fiber layer.

The fibers of the fiber layer are preferably glass fibers, in particular E-glass fibers. This is conducive to good heat resistancy and/or thermal insulation properties.

The protection element preferably has a thickness of less than 1,5 mm, in particular less than 1,0 mm, particularly preferably less than 0,5 mm. This leads to a small required space and a low weight of the protection element.

The fiber layer and/or protection element preferably has/have an area density of at least 300 g/m², preferably at least 400 g/m², and/or at most 600 g/m², preferably at most 500 g/m², in particular about 430 g/m². This is conducive to achieve sufficient heat-resistant and/or thermal insulation properties while at the same time keeping the weight and/or volume as low as possible.

Preferably, the protection element is heat-resistant up to at least 300 °C, preferably at least 500 °C, and/or less than 1000° C, preferably less than 800 °C. The coating preferably has a thermal decomposition temperature of at least 100°C, preferably at least 200°C, and/or less than 600 °C, preferably less than 400 °C. In this way, a destruction or formation of a hole in the protection element in the case of thermal runaway is made possible, while at the same time the protection element comprises sufficient heat-resistancy and/or thermal insulation properties for preventing a thermal runaway propagation to further battery cells.

It is preferred that the protection element is self-adhesive and/or comprises an adhesive on an outer side, in particular wherein the adhesive is arranged on the coating. The adhesive is preferably provided in the form of one or more strips and/or in an edge region of the protection element. This enhances the installation and/or fixing of the protection element, in particular in a battery.

According to another aspect, which can also be realized independently, the present invention relates to a rechargeable battery, preferably lithium-ion battery or sodium-ion battery and/or traction battery of an electric vehicle. The battery has several battery cells arranged next to each other, preferably wherein insulation elements are arranged between the battery cells, in particular for thermal insulation of the battery cells.

The battery cells have vents. In particular, each battery cell has a separate or individual vent. The vents are configured in such a way that hot gases and/or particles escape through the vent of a battery cell when a thermal runaway occurs in said battery cell. This results in a defined and/or localized escape of the hot gases and/or particles in case of a thermal runaway.

The battery preferably has a protection element, which is in particular configured as described herein. The advantages of the proposed protection element are preferably achieved accordingly with the battery.

The protection element preferably covers one or more of the vents. This avoids a thermal runaway propagation, i.e. a triggering of a thermal runaway in a battery cell due to the occurrence of a (first) thermal runaway in another battery cell.

The protection element is preferably configured to be partially destroyed when a thermal runaway occurs in one of the battery cells.

In particular, the protection against thermal runaway propagation works in the following way: When a thermal runaway occurs in a battery cell, the cell vents, i.e. the vent of the cell opens and hot gases and/or particles produced by the thermal runaway escape through the opened vent. Here, it is important that the protection element does not prevent the gases and/or particles from escaping the cell. Thus, the protection element is preferably configured to be locally destructed or form a hole, namely in a region covering the respective vent, when a thermal runaway occurs in a battery cell. This allows the escape of hot gases and/or particles despite the covering of the vent by the protection element. After leaving the vent and destroying the protection element locally, in particular forming a hole, the hot gases and/or particles travel through the battery and might reach other (adjacent) cells, potentially triggering thermal runaways in these cells as well. However, this is prevented by the protection element covering these vents. As the destruction or formation of a hole is delimited to a small region above the vent of the cell under thermal runaway, the protection element is still intact above the other cells or vents and accordingly protects there. After escaping the cell, the hot gases and/or particles cool down at least to some degree relatively quickly. The protection element is preferably configured in such a way that it is destroyed in a region where the (first) thermal runaway occurs but stays intact and/or withstands the cooled down, but still quite hot, gases/particles when they reach other cells/vents. Thus, the other cells are protected from a thermal runaway induced by the hot gases and/or particles due to the protection element covering the other cells/vents. Furthermore, the velocity and pressure and, thus, the temperature of the gas ejection is supposed to be higher at the vent location, but after ejection, when released in the larger space of the battery, the velocity and pressure and , therefore, the temperature should decrease. This should help to avoid hole formation above the other cells.

It is preferred that the protection element is less heat-resistant than the insulation elements between the battery cells. This is conducive to a defined escape of the hot particles and/or gases through the vent in the case of a thermal runaway.

The battery preferably has a free space on a side of the protection element facing away from the battery cells. This prevents pressure from building up and allows the hot particles and/or gases formed in the thermal runaway to escape or travel away from the cell under thermal runaway, which is in particular conducive to a cooling down of and/or to discharge or guide away the particles and/or gases.

In particular, the battery comprises a, preferably thermally insulating, cover element, the free space being formed between the protection element and the cover element. This prevents the development of heat outside the free space and/or confines the heat, hot gases/and or particles to the free space.

The protection element preferably comprises a heat-reflecting, flame-retardant and/or dustproof coating, which is preferably arranged on a side of the protection element facing away from the battery cells.

According to a further aspect, which may also be realized independently, the present invention relates to a use of a protection element, which is in particular configured as described herein, for thermal insulation and/or protection of a rechargeable battery having several battery cells, the battery preferably being configured as described herein, wherein the protection element is used for preventing a thermal runaway propagation.

In particular, the battery cells have vents and the protection element covers vents of adjacent battery cells, wherein the protection element is configured in such a way that, when a thermal runaway occurs in one of the battery cells, a hole is formed in the protection element by hot gases and/or hot particles escaping through the vent of said one of the battery cells.

Particularly preferably, the hot gases and/or particles cool down after escaping from the vent and the protection element is configured to withstand or resist the cooled down (but still quite hot) gases and/or particles, thus preventing a propagation of the thermal runaway to other battery cells.

The above-mentioned aspects and features of the present invention as well as the aspects and features of the present invention resulting from the claims and the following description can basically be realized independently of each other, but also in any combination and/or sequence.

Additional advantages, features, properties and aspects of the present invention result from the claims and the following description of preferred embodiments based on the drawing. It shows:
- Fig. 1: a schematic sectional view of a proposed protection element;
- Fig. 2: a schematic representation of an electric vehicle with a proposed battery comprising a protection element;

- Fig. 3: a schematic perspective view of a fiber layer of the protection element, the fiber layer having a finish; and
- Fig. 4: a schematic exploded view of a mounting plate of the battery and the protection element.

In the Figures, the same reference signs are used for identical or similar components and devices, wherein the same or corresponding advantages and properties may result, even if a repeated description is omitted.

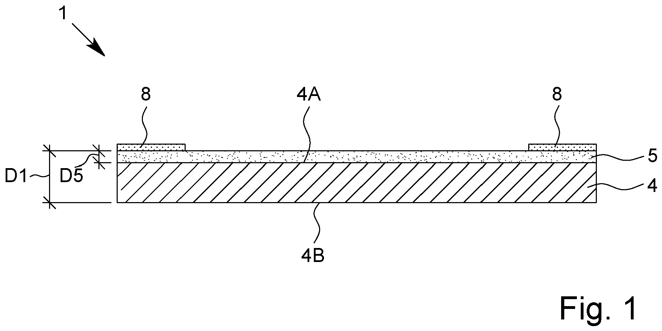

Fig. 1 shows a protection element 1 according to the proposal in a schematic sectional view. The protection element 1 is configured for thermal insulation of a battery 2 and/or for protection of a battery 2, in particular against thermal runaway propagation.

The battery 2 is a rechargeable battery. Preferably, the battery 2 is a lithium-ion battery or sodium-ion battery. In particular, the battery 2 is a traction battery of an electric vehicle 3.

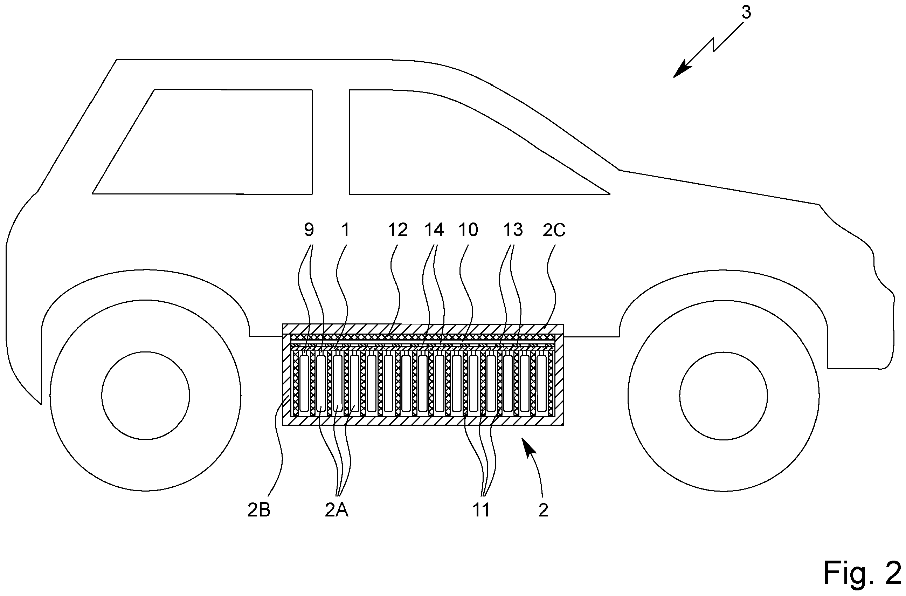

Fig. 2 schematically shows an electric vehicle 3 having a traction battery 2, the traction battery 2 having a protection element 1.

An electric vehicle in the sense of the present invention preferably is a vehicle, in particular automobile or car, that uses one or more electric motors for propulsion, in particular using only energy stored in one or more batteries. The electric vehicle may be a full electric vehicle or a hybrid electric vehicle (i.e., a vehicle that combines a conventional internal combustion engine system with an electric propulsion system).

A traction battery of an electric vehicle in the sense of the present invention is in particular a rechargeable battery used to power the electric motor or motors of an electric vehicle.

In the following, first the protection element 1 will be described in more detail. Subsequently, the battery 2 will be described in more detail.

The protection element 1 is preferably flat, planar, sheet-like and/or mat-like and/or has an at least essentially rectangular shape. Thus, the protection element 1 preferably has a thickness D which is a multiple of the width and length of the protection element 1.

The protection element 1 has a fiber layer 4. Further, the protection element 1 or fiber layer 4 has a coating 5.

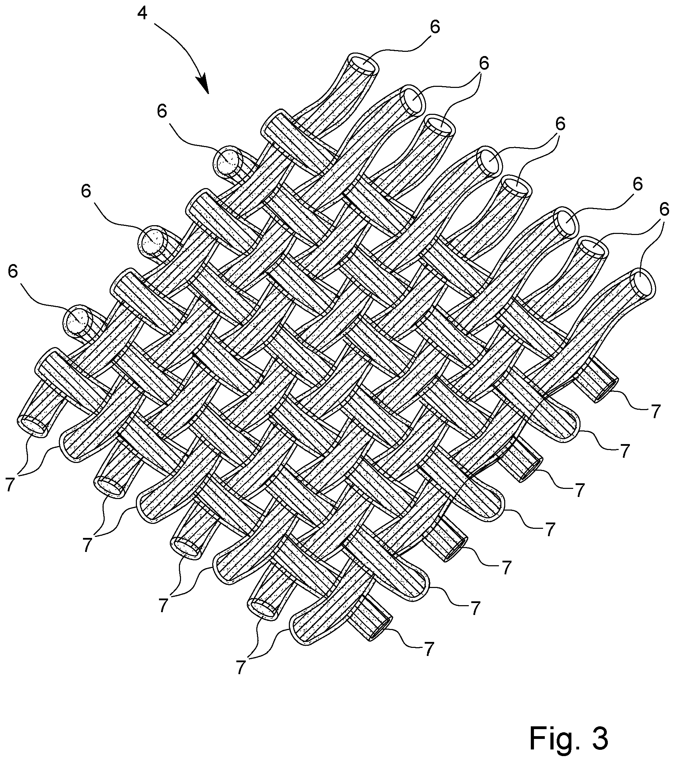

The fiber layer 4 is depicted in more detail in a very schematic, perspective view in Fig. 3.

The fiber layer 4 preferably has two sides 4A, 4B. The sides 4A, 4B are preferably flat sides and/or constitute the main surfaces of the fiber layer 4. For better differentiation, the sides 4A, 4B are also denoted as "upper side 4A" and "lower side 4B" in the following.

Relative terms such as "above", "below", "upper", "lower" or the like refer in particular to the orientation of the protection element 1 and/or battery 2 shown in the Figures, in which the coating 5 is arranged above the fiber layer 4.

The fiber layer 4 is preferably a woven fiber layer. In other words, the fiber layer 4 is preferably a woven fabric. The fiber layer 4 preferably has a cross-twill weave. However, other weaves are possible as well. In Fig. 3, a fiber layer having a different weave than a cross-twill weave is shown for simplicity.

The fiber layer 4 has a plurality of fibers 6 which are preferably glass fibers 6, in particular E-glass fibers 6.

The fiber layer 4 and/or fibers 6 - more precisely yarns formed from filaments - preferably have a finish 7, as schematically shown in Fig. 3. The finish 7 is preferably a chemical finish.

Preferably, the fibers 6 are yarns formed from filaments.

A finish in the sense of the present invention is in particular a surface modification of the fibers 6 and/or fiber layer 4. In general, a finish serves to amend, tailor and/or improve properties of a given fiber or fiber layer and/or to add properties to a fiber layer.

The finish 7 preferably surrounds or encloses the fibers 6 and/or fiber layer 4 completely and/or on all sides. This is in particular schematically indicated in Fig. 3.

The finish 7 is preferably a flame-retardant finish.

A flame-retardant finish in the sense of the present invention is preferably a finish which comprises a flame retardant and in particular improves the flame-retardancy of the fiber layer 4 and/or fibers 6. Thus, the fibers 6 or fiber layer 4 finished with the flame-retardant finish 7 preferably has/have a better flame-retardancy than the fibers 6 or fiber layer 4 without the flame-retardant finish 7.

The finish 7 and/or fiber layer 4 finished with the finish 7 and/or protection element 1 is preferably heat resistant, in particular up to at least 200°C, most preferred up to at least 400°C, 600°C or 700°C.

The term "heat resistant" in the sense of the present invention is preferably used to describe the resistance or durability of a material or component to high temperatures or the temperatures mentioned. In particular, a material or component that is heat resistant up to a certain temperature is able to resist or remain unaffected and/or at least essentially maintains its properties when exposed to said temperature.

Preferably, a material or component, in particular the protection element 1, the fiber layer 4, the coating 5, the fibers 6 and/or the finish 7, is heat-resistant if it meets the requirements of one of the insulation material classes according to DIN EN 60085:2008-08, in particular insulation material class F, H, N or R of this standard.

The finish 7 preferably comprises metal oxide, in particular copper oxide and/or aluminum oxide. The metal oxide preferably is or serves as flame retardant and/or results in the flame-retardant properties. However, flame retardants other than metal oxide may also be used.

In particular, a finish comprising metal oxide is to be understood as a flame-retardant finish and/or heat-resistant finish in the sense of the present invention.

The finish 7 is preferably a calcium silicate finish or comprises calcium silicate and/or silicic acid. This preferably results in the flame-retardant properties of the finish 7.

Further, the finish 7 preferably comprises pigments, in particular colored pigments, one or more organic binders, in particular polymers, and/or one or more foaming agents, in particular one or more surfactants.

The finish 7 is preferably applied to the fiber layer 4 and/or yarns/fibers 6 or optionally to the filaments by dip coating.

Dip coating is in particular a process, in which a substrate, such as a fiber layer or woven fabric, is dipped in or moved through a dipping bath. The dipping bath is preferably a water-based, solvent-free (i.e. without organic solvent) liquid with functional fillers. The substrate is preferably completely saturated with the dipping bath/liquid. Excess liquid is preferably squeezed out and preferably fed back into the dipping bath. Afterwards, the substrate is dried.

In particular, dip coating is a continuous roll-to-roll process.

A roll-to-roll process in the sense of the present invention is in particular a fabrication method in which a finish or coating is applied onto a flexible rolled substrate material, in particular the fiber layer 4, as that material is fed continuously from one roller on to another.

Alternatively, the finish 7 can be applied by any other suitable process, such as screen coating, spray coating or the like.

The coating 5 is preferably heat-reflecting, flame-retardant and/or dustproof.

A heat-reflecting coating in the sense of the present invention is preferably a coating which has a reflectivity of more than 70%, more preferably more than 80 %, in particular more than 90%, and/or a hemispherical emissivity of less than 30 %, more preferably less than 20 %, in particular less then 10 %.

Aflame-retardant coating in the sense of the present invention is preferably a coating which comprises a flame retardant and preferably improves the flame-retardancy of the fiber layer 4 and/or protection element 1. Thus, the fiber layer 4 coated with the flame-retardant coating 5 preferably has a better flame-retardancy than the fibers 6 or fiber layer 4 without the flame-retardant coating 5.

A dustproof coating in the sense of the present invention is preferably a coating which is impervious to small particles such as dust particles, in particular particles having a particle size of 10 µm or more.

The coating 5 preferably comprises polyurethane, in particular as a binder, and/or is a polyurethane coating.

In particular, a polyurethane coating is to be understood as a dustproof coating and/or flame-retardant coating in the sense of the present invention.

The coating 5 preferably comprises metal particles, in particular aluminum particles.

Particularly preferably, the metal particles are embedded in and/or bound or held together by the polyurethane.

In particular, a coating comprising metal or aluminum particles is to be understood as a heat-reflecting coating in the sense of the present invention.

The coating 5 is preferably heat resistant, in particular up to at least 200°C, most preferred up to at least 300°C, 400°C or 500°C.

The coating 5 preferably forms a layer or coating layer on the fiber layer 4 and/or a layer which is at least essentially separate from the fiber layer 4, as schematically indicated in Fig. 1. Of course, it is possible that the coating 5 partially penetrates into the fiber layer, but it preferably does not completely penetrate the fiber layer 4.

The coating 5 is preferably (at least essentially) arranged (preferably only) on one side 4A or outer side, in particular the upper side 4A, of the fiber layer 4 and/or protection element 1.

Thus, while the finish 7 preferably penetrates into the fiber layer 4 and/or surrounds the fibers 6 on all sides, the coating 5 preferably forms an at least essentially separate layer on the fiber layer 4 and/or is at least essentially arranged on only one side 4A of the fiber layer 4.

The coating 5 is preferably applied to the fiber layer 4 by knife coating.

Knife coating, also known as tape casting, is in particular a process, in which the coating is applied to a substrate, in particular the fiber layer 4, by moving the substrate under a knife or blade which scrapes an, in particular pasty, coating mass onto the substrate over a defined gap. Afterwards, the substrate is dried.

In particular, knife coating is a continuous roll-to-roll process.

Alternatively, the coating 5 can be applied by any other suitable process, such as screen coating, spray coating or the like.

The coating 5 preferably has a thickness D5 of less than 0,1 mm, in particular less than 0,05 mm, particularly preferably less than 0,01 mm.

The coating 5 is preferably free of halogens and/or solvents, in particular free of organic solvents.

The coating 5 preferably has a thermal decomposition temperature of at least 100°C, preferably at least 200°C, and/or less then 600 °C, preferably less than 400 °C.

The coating 5 is preferably less heat resistant and/or has a lower thermal decomposition temperature than the fiber layer 4, the fibers 6, the finish 7 and/or the fibers 6 or fiber layer 4 finished with the finish 7.

The protection element 1 and/or fiber layer 4 preferably has a thickness D1 of less than 1,5 mm, in particular less than 1,0 mm, particularly preferably less than 0,5 mm. As the coating 5 (and the adhesive 8 explained below) are preferably very thin compared to the fiber layer 4, the thickness D1 of the protection element 1 is preferably at least essentially the same as the thickness of the fiber layer 4.

The fiber layer 4 and/or protection element 1 preferably has an area density of at least 300 g/m², preferably at least 400 g/m², and/or at most 600 g/m², preferably at most 500 g/m², in particular about 430 g/m².

The protection element 1 is preferably self-adhesive and/or comprises an adhesive 8 on an outer side.

The adhesive 8 is preferably arranged on the coating 5, as in particular shown in Fig. 1.

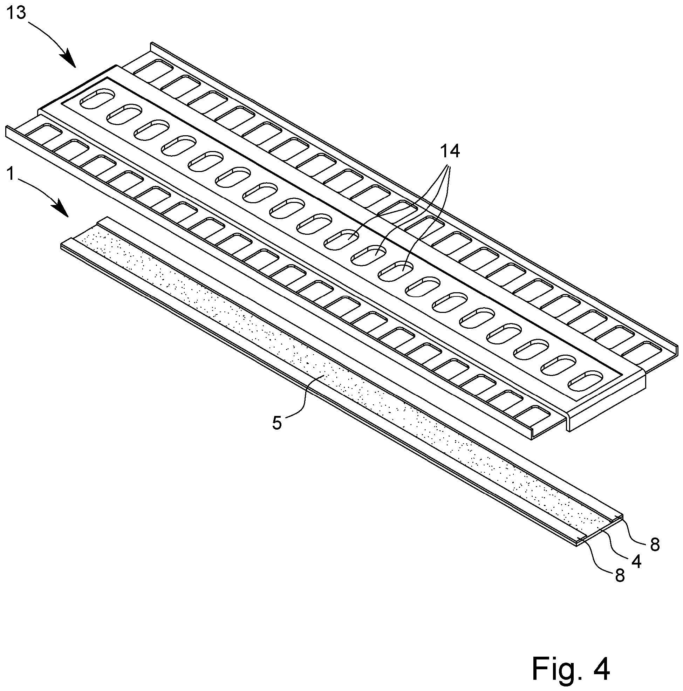

Preferably, the adhesive 8 forms two strips at the edge or in the edge regions of the protection element 1 and/or coating 5, as in particular shown in Figs. 1 and 4. In other words, the protection element 1 preferably comprises a central region in which no adhesive 8 is present, wherein the central region is arranged between two edge regions in each of which the adhesive 8 is present.

The protection element 1 preferably consists of the fiber layer 4 and the coating 5 or of the fiber layer 4, the coating 5 and the adhesive 8. Thus, in other words, the protection element 1 does preferably not have further layers in addition to the fiber layer 4 and the coating 5 or in addition to the fiber layer 4, the coating 5 and the adhesive 8.

In the following, a proposed battery 2 comprising the protection element 1 is described in more detail. The battery 2 is shown in Fig. 2.

The battery 2 preferably comprises several battery cells 2A arranged in a housing 2B. The battery 2 and/or housing 2B preferably comprises a lid or cover 2C. In the electric vehicle 3, the cover 2C is preferably arranged on an upper side of the battery 2 and/or between the battery cells 2A and an interior or passenger cabin of the vehicle 3.

The battery cells 2A are preferably stacked and/or arranged next to one another and/or arranged in rows. Preferably, the battery cells 2A are prismatic cells or pouch cells. However, other cell types are also possible.

The battery cells 2A preferably have vents 9. In particular, each battery cell 2A has its own vent 9 or a separate vent 9. The vents 9 are configured to open and/or allow the escape of hot gases and/or particles in case of a thermal runaway of the respective battery cell 2A. This process is also denoted as "venting".

The battery 2 preferably comprises a protection element 1.

The protection element 1 is preferably arranged inside the housing 2B. Preferably, the protection element 1 is arranged above the battery cells 2A or on a side of the battery cells 2A facing the passenger cabin of the vehicle 3. In particular, the protection element 1 is arranged between the battery cells 2A and the cover 2C.

The protection element 1 is preferably arranged at least essentially horizontally and/or transverse, in particular perpendicular, to the battery cells 2A.

The protection element 1 preferably covers one or more of the battery cells 2A or adjacent battery cells 2A. In particular, the protection element 1 covers and/or seals one or more of the vents 9, in particular adjacent vents 9 and/or all of the vents 9. In particular, the protection element 1 avoids the ingress of dust and/or dirt and/or any undesired particles in the vents 9 and/or the battery cells 2A.

In the battery 2, the protection element 1 is preferably arranged with the coating 5 and/or adhesive 8 facing upwards and/or being arranged on a side 4A of the fiber layer 4 facing away from the battery cells 2A and/or vents 9.

Preferably, the protection element 1 is a single and/or coherent part. Thus, different vents 9 are preferably covered by different coherent regions or sections of the same part, as in particular shown in the figures. However, the protection element 1 of the battery 2 or arranged in the battery 2 may also comprise or consist of separate parts or pieces, in particular of the same material, which together form a protection element. Thus, different vents 9 may be covered by different parts or pieces, which nevertheless form or are denoted as one common protection element 1 in the present context.

The protection element 1 is preferably configured to be partially destroyed in the case of venting and/or thermal runaway. In particular, the protection element 1 is configured so that a hole is (deliberately) formed in the region of the protection element 1 covering the vent 9 of a battery cell 2A when venting or a thermal runaway occurs in said battery cell 2A. Preferably, the protection element 1 is configured so that the hole does not spread and/or is present only in a delimited region around the vent 9, so that the protection element 1 stays intact above the vents 9 of other battery cells 2A.

In particular, the battery cells 2A are protected and/or a thermal runaway propagation is prevented in the following way:

When a thermal runaway occurs in one of the battery cells 2A, the vent 9 of that battery cell 2A opens and hot particles and/or gases escape through the vent 9. After escaping, the hot particles and/or gases spread inside the battery 2, which bears the risk of inducing further thermal runaways in other battery cells 2A, which process is also known as thermal runaway propagation.

In the present invention, the thermal runaway propagation is in particular prevented by the protection element 1 covering the battery cells 2A and/or vents 9.

It was recognized that the hot gases and particles produced in a thermal runaway cool down at least to some degree after escaping the vent 9 and when spreading inside the battery 2. This is utilized in the present invention.

The protection element 1 is in particular configured in such a way that it stays intact above the other vents 9 and is further configured so that it is sufficiently heat-resistant and/or thermally insulating to prevent the triggering of a thermal runaway in other battery cells 2A by the (slightly cooled down) hot gases and particles.

Further, the protection element 1 is deliberately designed to be destroyed or burned through by the hot gases and particles escaping the vent 9 or battery cell 2A in which the thermal runaway occurs. This ensures a defined escape of the gases and particles through the vent 9 and avoids an uncontrolled escape and/or an expansion or explosion of the battery cell 2A under thermal runaway.

In particular by the coating 5, the finish 7 and/or the specific combination of coating 5 and the finish 7, particularly preferably in further combination with the fiber layer 4, it is achieved that, when a thermal runaway occurs, on the one hand, the escape of gases and particles through a vent 9 is not or only insignificantly impeded by the protection element 1 covering the vent 9, and on the other hand, the (intended) destruction of the protection element 1 is delimited to a small and/or defined area, while the protection element 1 stays intact outside this destroyed area and in this way prevents the triggering of thermal runaways in other batter cells 2A.

Preferably, the battery 2 comprises a free space 10, or, in other words, a free space 10 is formed in the battery 2. The free space 10 is preferably arranged on a side of the protection element 1 facing away from the battery cells 2A and/or above the protection element 1, i.e. in particular on a side of the protection element 1 facing the cover 2C. The free space 10 in particular allows spreading and/or cooling down of the hot gases and/or particles in the case of a thermal runaway.

The battery 2 preferably comprises a plurality of insulation elements 11 for thermally and/or electrically insulating the battery cells 2A. The insulation elements 11 are preferably arranged inside the housing 2B, in particular between the battery cells 2A or between adjacent battery cells 2A.

In particular, each battery cell 2A is isolated and/or surrounded by one or more insulation elements 11 and/or arranged between two insulation elements 11. Preferably, an insulation element 11 is arranged between two battery cells 2Ain each case.

The battery 2 preferably comprises a cover element 12, which is preferably arranged inside the housing 2B. The cover element 12 preferably is arranged above the battery cells 2A and/or covers the battery cells 2A. The cover element 12 is preferably arranged between the battery cells 2A and the cover 2C. In particular, the cover element 12 is fixed or attached to the cover 2C and/or integrated into the cover 2C.

The cover element 12 is preferably thermally and/or electrically insulating. In particular, the cover element 12 has at least essentially the same thermally and/or electrically insulating properties as the insulation elements 11 and/or is made of at least substantially the same material as the insulation elements 11.

Preferably, the cover element 12 is arranged next to and/or at a distance to the protection element 1. Preferably, the cover element 12 is arranged at least essentially parallel to the protection element 1.

The free space 10 is preferably arranged between the protection element 1 on the one hand and the cover 2C and/or cover element 12 on the other hand.

The battery 2 preferably has a mounting plate 13. The mounting plate 13 is preferably configured for the mounting of several components of the battery 2 and/or enhances the mounting of the battery 2.

The mounting plate 13 is in particular shown in Figs. 2 and 4.

The mounting plate 13 is preferably at least essentially arranged inside the housing 2B.

Preferably, the mounting plate 13 fixes the battery cells 2A. Further, a busbar (not shown) of the battery 2 may be mounted on the mounting plate 13.

The mounting plate 13 preferably comprises holes 14 which correspond to the vents 9. In particular, each hole 14 corresponds to one vent 9. The holes 14 are preferably arranged above the vents 9.

The protection element 1 is preferably arranged under the mounting plate 13 and/or between the mounting plate 13 and the battery cells 2A. The mounting plate 13 is preferably arranged between the battery cells 2A and the cover 2C and/or cover element 12, in particular between the protection element 1 and the cover 2C and/or cover element 12.

The protection element 1 is preferably fixed or attached to the mounting plate 13. In particular, the protection element 1 is adhered to the mounting plate 13, particularly preferably by the adhesive 8.

The protection element 1 preferably covers the holes 14 and/or is arranged between the vents 9 and the holes 14.

Preferably, the protection element 1 and/or adhesive 8 is arranged in such a way that the adhesive 8 is arranged outside the holes 14. Thus, when the mounting plate 13 and protection element 1 are mounted in the battery 2, the holes 14 are preferably covered by the protection element 1, wherein the coating 5 is present in the region of the holes 14 and/or no adhesive 8 is present in the region of the holes 14.

The free space 10 is preferably arranged between the mounting plate 13 and the cover 2C and/or cover element 12.

Individual aspects of the present invention can be combined as desired, but also realized independently of each other.

### List of Reference Signs:

- 1: Protection element
- 2: Battery
- 2A: Battery cell
- 2B: Housing
- 2C: Cover
- 3: Electric vehicle
- 4: Fiber layer
- 4A: (Upper) side
- 4B: (Lower) side
- 5: Coating
- 6: Fibers
- 7: Finish
- 8: Adhesive
- 9: Vent
- 10: Free space
- 11: Insulation element
- 12: Cover element
- 13: Mounting plate
- 14: Hole
- D1: Thickness of 1/4
- D5: Thickness of 5

## Claims

1. Protection element (1) for thermal insulation and/or protection of a rechargeable battery (2), preferably a lithium-ion battery or sodium-ion battery and/or a traction battery of an electric vehicle (3),
wherein the protection element (1) has an, in particular woven, fiber layer (4), preferably the fibers (6) and/or fiber layer (4) having a flame-retardant finish (7), the finish (7) in particular comprising metal oxide,
**characterized**
**in that** the fiber layer (4) is coated with a heat-reflecting, flame-retardant and/or dustproof coating (5).

2. Protection element according to claim 1, **characterized in that** the fibers (6) are formed by yarns made of filaments and/or the finish (7) comprises calcium silicate, silicic acid, a binder and/or a foaming agent.

3. Protection element according to claim 1 or 2, **characterized in that** the finish (7) surrounds or encloses the fibers (6) and/or fiber layer (4) on all sides and/or is applied to the fibers (6) and/or fiber layer (4) by dip coating (5).

4. Protection element according to one of the preceding claims, **characterized in that** the coating (5) is a polyurethane coating (5) and/or comprises metal particles, in particular aluminum particles.

5. Protection element according to one of the preceding claims, **characterized in that** the coating (5) forms a coating layer on the fiber layer (4) and/or is arranged on one side of the fiber layer (4) and/or is applied to the fiber layer (4) by knife coating.

6. Protection element according to one of the preceding claims, **characterized in that** the fibers (6) of the fiber layer (4) are glass fibers, in particular E-glass fibers.

7. Protection element according to one of the preceding claims, **characterized in that** the protection element (1) and/or fiber layer (4) has a thickness of less than 1,5 mm, in particular less than 1,0 mm, particularly preferably less than 0,5 mm.

8. Protection element according to one of the preceding claims, **characterized in that** the fiber layer (4) and/or protection element (1) has an area density of at least 300 g/m², preferably at least 400 g/m², and/or at most 600 g/m², preferably at most 500 g/m², in particular about 430 g/m².

9. Protection element according to one of the preceding claims, **characterized in that** the protection element (1) is heat-resistant up to at least 300 °C, preferably at least 500 °C, and/or less then 1000° C, preferably less than 800 °C, and/or the coating (5) has a thermal decomposition temperature of at least 100°C, preferably at least 200°C, and/or less then 600 °C, preferably less than 400 °C.

10. Protection element according to one of the preceding claims, **characterized in that** the protection element (1) is self-adhesive and/or comprises an adhesive (8) on an outer side, in particular wherein the adhesive (8) is arranged on the coating (5), in particular in the form of one or more strips, and/or provided in an edge region of the protection element (1).

11. Rechargeable battery (2), preferably lithium-ion battery or sodium-ion battery and/or traction battery of an electric vehicle (3),
the battery (2) having several battery cells (2A) arranged next to each other, preferably wherein insulation elements (11) are arranged between the battery cells (2A),
the battery cells (2A) having vents (9) which are preferably configured in such a way that hot gases and/or particles escape through the vent (9) of a battery cell (2A) when a thermal runaway occurs in said battery cell (2A),
**characterized**
**in that** the battery (2) has a protection element (1) covering one or more of the vents (9), and/or
**in that** the battery (2) has a protection element (1) according to one of the preceding claims.

12. Rechargeable battery (2) according to claim 11, **characterized in that** the protection element (1) is less heat-resistant than the insulation elements (11) and/or is configured to be partially destroyed when a thermal runaway occurs in one of the battery cells (2A), in particular in order to release gases in a controlled way.

13. Rechargeable battery (2) according to claim 11 or 12, **characterized in that** a free space (10) is formed on a side of the protection element (1) facing away from the battery cells (2A), in particular wherein the battery (2) comprises a, preferably thermally insulating, cover element (12), the free space (10) being formed between the protection element (1) and the cover element (12).

14. Rechargeable battery (2) according to one of claims 11 to 13, **characterized in that** the protection element (1) comprises a heat-reflecting, flame-retardant and/or dustproof, coating (5), which is preferably arranged on a side of the protection element (1) facing away from the battery cells (2A).

15. Use of a protection element (1), in particular according to one of claims 1 to 10, for thermal insulation and/or protection of a rechargeable battery (2) having several battery cells (2A), preferably according to one of claims 11 to 14, wherein the protection element (1) is used for preventing a thermal runaway propagation,
in particular wherein the battery cells (2A) have vents (9) and the protection element (1) covers vents (9) of adjacent battery cells (2A), wherein the protection element (1) is configured in such a way that, when a thermal runaway occurs in one of the battery cells (2A), a hole is formed in the protection element (1) the by hot gases and/or hot particles escaping from the vent (9) of said one of the battery cells (2A),
particularly preferably wherein the hot gases and/or particles cool down after escaping from the vent (9) and the protection element (1) is configured to withstand the cooled down gases and/or particles, thus preventing a propagation of the thermal runaway to other battery cells (2A).
